# EUROPÄISCHE PATENTSCHRIFT

(11) **EP 3 765 352 B1**
(45) Veröffentlichungstag und Bekanntmachung des Hinweises auf die Patenterteilung: **11.10.2023**
(21) Anmeldenummer: 18815984.2
(22) Anmeldetag: 04.12.2018
(51) Int. Cl.: B62D 25/20, B62D 35/00

(54) **VERKLEIDUNGSEINRICHTUNG FÜR EINEN SEITENSCHWELLER EINES PERSONENKRAFTWAGENS**
COVER DEVICE FOR A SIDE SILL OF A PASSENGER CAR
DISPOSITIF D'HABILLAGE POUR UN LONGERON LATÉRAL D'UN VÉHICULE PARTICULIER

(30) Priorität: 13.03.2018 DE 102018001993
(43) Veröffentlichungstag der Anmeldung: 20.01.2021
(73) Patentinhaber: Mercedes-Benz Group AG, 70372 Stuttgart (DE)
(72) Erfinder: HAHN, Samuel, 71034 Böblingen (DE)
(74) Vertreter: Novagraaf Group
(86) Internationale Anmeldenummer: PCT/EP2018/083413
(87) Internationale Veröffentlichungsnummer: WO 2019/174768

(56) Entgegenhaltungen:
- DE-A1- 3 613 301
- DE-A1-102012 018 284

## Beschreibung

Die Erfindung betrifft eine Verkleidungseinrichtung für einen Seitenschweller eines Personenkraftwagens gemäß dem Oberbegriff des Anspruchs 1. Des Weiteren betrifft die Erfindung die einen Personenkraftwagen gemäß Anspruch 11.

Bei Seitenschwellern von Personenkraftwagen ist üblicherweise eine Verkleidungseinrichtung vorgesehen, welche eine Schwellerverkleidung umfasst, welche sich unter anderem im Bereich unterhalb einer Türöffnung erstreckt und welche die Türunterkante in Fahrzeugquerrichtung nach außen hin überragt oder zumindest bündig mit dieser abschließt. Eine derartige Erstreckung des jeweiligen der Schwellerverkleidung ist erforderlich, um die Seitentür und insbesondere deren Türunterkante vor Steinschlägen und Schmutz von unten her zu schützen.

Die beschriebene, wünschenswerte Erstreckung der Schwellerverkleidung in Fahrzeugquerrichtung nach außen wirft allerdings im Bereich der jeweiligen Türöffnung die Problematik auf, dass stetig steigende Anforderungen an die Ergonomie und den Komfort von Fahrzeugen, insbesondere im Hinblick auf die Bequemlichkeit beim Ein- und Ausstieg, erheblich konterkariert werden. Beim Ein- und Aussteigen führt dies nämlich dazu, dass die Schwellerverkleidung unterhalb der Türöffnung den Beinen des jeweiligen Fahrgastes im Weg ist, was gerade auch für ältere Menschen oder Personen mit eingeschränkter Mobilität zu einem eingeschränkten Komfort führen kann. Dieses Problem verschärft sich beispielsweise auch, wenn die Fahrzeugtür bei beengten Parkverhältnissen nicht weit geöffnet werden kann.

Aus der DE 10 2009 031 534 A1 ist es bereits bekannt, unterhalb einer korrespondierenden Türöffnung einer Kraftwagenkarosserie ein eigensteifes äußeres Verkleidungselement anzuordnen, welches zwischen einer Verkleidungsstellung, die das Verkleidungselement im Fahrbetrieb des Kraftwagens einnimmt, und einer Einstiegsstellung verlagerbar ist, welche das Verkleidungselement insbesondere beim Ein- und Ausstieg aus dem Kraftwagen einnehmen soll. Durch diese bekannte Verkleidungseinrichtung kann somit generell die Problematik gelöst werden, einerseits eine Türunterkante einer jeweiligen Seitentür in Fahrzeugquerrichtung hinreichend zu überdecken beziehungsweise zumindest bündig mit dieser abzuschließen, um hierdurch einen entsprechenden Schutz vor Korrosion und Schmutz zu gewährleisten, und andererseits durch die Verlagerung des Verkleidungselements den Ein- und Ausstieg aus dem Kraftwagen zu vereinfachen.

Aus der DE 10 2012 018 284 A1 ist außerdem eine Schwellerverkleidung bekannt, welche wenigstens ein schwellerfestes Verkleidungsteil und wenigstens ein in einem Längenbereich des Seitenschwellers unterhalb einer Türöffnung angeordnetes bewegliches Verkleidungselement aus einem flexiblen Werkstoff umfasst. Mittels einer Antriebseinheit ist das bewegliche Verkleidungselement zwischen einer Verkleidungsstellung und einer Einstiegsstellung verlagerbar.

Aus der DE 10 2004 045 382 A1 geht ein Kraftfahrzeug mit einem Seitenschweller hervor, der mit einer äußeren, im Bereich einer mittels eine Fahrzeugseitentür öffenbaren und verschließbaren Türausschnittsöffnung vorgesehenen Seitenverkleidung versehen ist, welche mittels eines mehrere Lenker aufweisenden Viergelenks am Seitenschweller um eine Achse schwenkbar angelenkt und so zwischen einer Wirkstellung, in der sie die aerodynamischen Eigenschaften des Kraftfahrzeugs verbessert, in eine bei geöffneter Fahrzeugseitentür einnehmenden Einstiegsstellung verlagerbar ist, in der der Seitenschweller in Fahrzeugquerrichtung gesehen schmaler als in der Wirkstellung ist, sodass das Ein- und Aussteigen eines Passagiers durch die Türausschnittsöffnung erleichtert wird. ist. Das Verschwenken der Seitenverkleidung erfolgt zwangsweise durch bewegen der Fahrzeugseitentür. Hierzu ist das Viergelenk mit einer Türscharnierachse mechanisch gekoppelt. Das Ende der Schwenkbewegung der Seitenverkleidung erfolgt durch Anschlagen derselben am Seitenschweller.

Aus der DE 36 13 301 A1 geht eine Seitenverkleidung für Personenkraftwagen nach dem Oberbegriff von Anspruch 1 hervor,
die zumindest den Bereich von seitlichen Schwellern abdeckt. Die Seitenverkleidung weist mehrere, jeweils ein Filmscharnier ausbildende Sollbiegestellen auf und ist dadurch mittels eines Stellantriebs in eine ausgestellte, die Aerodynamik des Personenkraftwagens vorteilhaft beeinflussende Wirkstellung und in eine eingeklappte Nichtgebrauchsstellung verlagerbar.

Allen bekannten Verkleidungseinrichtungen ist gemeinsam, dass diese einen relativ großen Bauraumbedarf und/oder einen komplexen, kostenintensiven Aufbau aufweisen und dennoch als Ein- beziehungsweise Ausstiegshilfe nur bedingt funktionell sind, weil der für den Ein- beziehungsweise Ausstieg freigebbare Raum häufig nur gering ist.

Aufgabe der vorliegenden Erfindung ist es, eine Verkleidungseinrichtung der eingangs genannten Art zu schaffen, welche einen einfachen, Bauraum sparenden und montagefreundlichen Aufbau aufweist. Eine weitere Aufgabe besteht darin, einen entsprechenden Personenkraftwagen mit einer derartigen Verkleidungseinrichtung anzugeben.

Diese Aufgabe wird erfindungsgemäß durch eine Verkleidungseinrichtung mit den Merkmalen des Anspruchs 1 und durch einen Personenkraftwagen mit den Merkmalen des Anspruchs 11 gelöst. Vorteilhafte Ausgestaltungen mit zweckmäßigen Weiterbildungen der Erfindung sind Gegenstand der abhängigen Patentansprüche.

Die erfindungsgemäße Verkleidungseinrichtung für einen Seitenschweller eines Personenkraftwagens weist eine Schwellerverkleidung auf, welche in einem Längenbereich des Seitenschwellers unterhalb einer Türöffnung angeordnete, beweglich miteinander gekoppelte, erste und zweite Verkleidungselemente umfasst. Des Weiteren ist eine Antriebseinheit zur gemeinsamen Verstellung der ersten und zweiten Verkleidungselemente zwischen einer ersten Funktionsstellung und einer zweiten Funktionsstellung und/oder der zweiten Funktionsstellung und der ersten Funktionsstellung vorgesehen. Während das erste Verkleidungselement um eine erste Achse L schwenkbar ist, wird dabei das zweite Verkleidungselement um eine zweite Achse W verschwenkt. Die Verkleidungseinrichtung zeichnet sich dadurch aus, dass das zweite Verkleidungselement mittels einer Lagereinrichtung am ersten Verkleidungselement um die zweite Achse W schwenkbar gelagert ist, dass die Verlagerungsbewegung des zweiten Verkleidungselements relativ gegenüber dem ersten Verkleidungselement mittels einer Kulisse gesteuert ist und dass die Lagereinrichtung eine Koppel umfasst, welche um die zweite Achse W schwenkbar am ersten Verkleidungselement gelagert und mit dem zweiten Verkleidungselement verbunden ist. Das zweite Verkleidungselement kann sich also nicht frei gegenüber dem ersten Verkleidungselement bewegen, sondern wird gezielt so relativ gegenüber dem ersten Verkleidungselement zwangsverschwenkt, dass sich beide Verkleidungselemente in eine bauraumsparende Position verlagern lassen, in welche diese einen vorzugsweise annährend maximalen Raum für den erleichterten beziehungsweise komfortablen Ein - Ausstieg freigeben. Bei der Koppel handelt es sich um ein Verbindungsglied für das zweite Verkleidungselement zur zweiten Achse W, welches somit in einem Abstand zur zweiten Achse W gehalten wird. Die Koppel kann daher ohne weiteres auch als Gelenkhebel bezeichnet werden, weil diese entsprechend - vorzugsweise an einem Ende - schwenkbeweglich gelagert ist und beabstandet vom Gelenk das zweite Verkleidungselement aufweist. Die Koppel kann dabei als separates Teil ausgebildet sein, welches mit dem zweiten Verkleidungselement versehen beziehungsweise an dem das zweite Verkleidungselement befestigt ist. Bei einem anderen Ausführungsbeispiel ist vorgesehen, dass die Koppel und das zweite Verkleidungselement einteilig ausbildet sind, beispielsweise indem diese als ein Teil hergestellt sind, beispielsweise mittels eines Spritzgussverfahrens.

Bei der ersten Funktionsstellung der Schwellerverkleidung handelt es sich vorzugsweise um eine sogenannte Verkleidungs- oder auch Wirkstellung, in der sie gegebenenfalls die aerodynamischen Eigenschaften des Kraftfahrzeugs verbessert und die Türkante gegen Steinschlag und dergleichen schützt. Bei der zweiten Funktionsstellung der Schwellerverkleidung, welche auch als Komfort- oder auch Einstiegsstellung bezeichnet wird, ist die zugeordnete Fahrzeugseitentür zumindest teilweise geöffnet. Durch die verschwenkten beziehungsweise in sich eingeschwenkten ersten und zweiten Verkleidungselemente ist die von einer Person beim Ein- und Aussteigen aus dem Kraftwagen zu überwindende Breite des Seitenschwellers in Fahrzeugquerrichtung gesehen schmaler als in der ersten Funktionsstellung ist.

Bei einer vorteilhaften Weiterbildung der Verkleidungseinrichtung ist vorgesehen, dass die Koppel mittels der Kulisse geführt ist. Die so geführte Koppel ist damit ein Lenker beziehungsweise Getriebeglied, welche letztlich nur entlang der vorgegebenen Bewegungsbahn der Koppel hin und her schwingt, wenn die Schwellerverkleidung zwischen den beiden Funktionsstellungen hin und her verlagert wird. Diese Ausgestaltung ist kostengünstig herstellbar und zudem funktionssicher, weil eine relativ exakte Bewegung der Schwellerverkleidung leicht realisierbar ist.

In bevorzugter Ausführungsform der Verkleidungseinrichtung ist vorgesehen, dass die Kulisse zumindest einen Führungsabschnitt aufweist, der -in Kraftwagenlängsrichtung, das heißt im Fahrzeugbau üblicherweise verwendeten Koordinatensystem in x-Richtung gesehen- von außen oben in Richtung zur Kraftwagenmitte hin schräg nach unten verläuft. Der Führungsabschnitt der Kulisse ist also gegenüber einer sich in x- und y-Richtung aufspannenden Horizontalebene geneigt ausgebildet, derart, dass bei einer Verlagerung der Schwellerverkleidung von der ersten Funktionsstellung in die zweite Funktionsstellung dabei das zweite Verkleidungselement von einer - in Kraftwagenhochrichtung (z-Richtung) gesehen - höheren Position in eine tieferliegende Position quasi heruntergeschwenkt beziehungsweise heruntergeklappt wird. Damit lässt sich eine besonders kompakte Anordnung der beiden Verkleidungselemente zueinander in der zweiten Funktionsstellung realisieren.

Besonders bevorzugt wird ein Ausführungsbeispiel der Verkleidungseinrichtung, bei dem die Kulisse an einem gegenüber dem Seitenschweller lagefest angeordneten Lagersteg vorgesehen ist. Dieser Lagersteg ist also gegenüber dem Seitenschweller unbeweglich und ermöglicht ein exaktes Steuern der Schwellerverkleidungbewegung. Dabei ist diese Art der Bewegungssteuerung besonders unempfindlich gegenüber Lagetoleranzen.

Weiterhin wird ein Ausführungsbeispiel bevorzugt, bei dem die zweite Achse W ortsfest am ersten Verkleidungselement vorgesehen ist. Das zweite Verkleidungselement ist also am ersten Verkleidungselement ausschließlich schwenkbar gelagert und wird bei einer Verlagerung des ersten Verkleidungselements um die ersten Achse L dabei vom ersten Verkleidungselement translatorisch (mit)bewegt. Bei einer Verlagerung der ersten und zweiten Verkleidungselemente zwischen den beiden Funktionsstellungen wird das erste Verkleidungselement ausschließlich verschwenkt, während das daran gelagerte zweite Verkleidungselement eine kombinierte Translations- und Schwenkbewegung ausführt.

Bei einer besonders vorteilhaften Ausführungsform der Verkleidungseinrichtung ist das erste Verkleidungselement um die erste Achse L entlang einer Kreisbogenbahn mit dem Radius R verlagerbar, wobei die Kreisbogenbahn dabei die Kulisse schneidet. Die Bewegungsbahnen kreuzen sich also. Bei dieser Art der Lagerung der beiden Verkleidungselemente befindet sich die erste Achse L vorzugsweise in einem unteren, fahrbahnnahen Bereich der Schwellerverkleidung, so dass sich bei einem Verschwenken des ersten Verkleidungselements ein -sich vorzugsweise nach oben hin sich öffnender-Spalt zwischen diesem und einem Karosserieelement, beispielsweise einem Abschnitt des Schwellers oder einem auf den Seitenschweller aufgesetzten Seitenwandabschnitt, kleiner beziehungsweise größer wird.

Vorzugsweise ist allen Ausführungsvariante der erfindungsgemäßen Verkleidungseinrichtung gemeinsam, dass die beiden Lagerachsen L und W in einem Abstand voneinander angeordnet sind und sich dabei - in Bezug auf die Fahrzeughochrichtung (z-Richtung) - auf unterschiedlichen Höhenniveaus befinden. Die beiden Achse L und W verlaufen parallel, vorzugsweise zumindest annährend parallel zueinander und auch zur Fahrzeuglängsachse (x-Richtung).

Um eine kompakte Anordnung der beiden Verkleidungselemente in der zweiten Funktionsstellung zu realisieren, ist bei einem vorteilhaften Ausführungsbeispiel der Verkleidungseinrichtung vorgesehen, dass in der ersten Funktionsstellung der Schwellerverkleidung, also in der quasi Ausgangsstellung, die zweite Achse W unterhalb der Kulisse angeordnet ist. Damit lässt sich ein sehr großer Schwenkwinkel für die das zweite Verkleidungselement aufweisenden Koppel realisieren und damit eine zumindest annährend größtmögliche Verstellung des zweiten Verkleidungselements relativ gegenüber dem ersten Verkleidungselement.

Weiterhin ist vorgesehen, dass in der zweiten Funktionsstellung der Schwellerverkleidung die zweite Achse W oberhalb des schräg nach unten verlaufenden Führungsabschnitts der Kulisse angeordnet ist. Dieser Führungsabschnitt der Koppel, der von der ersten zur zweiten Funktionsstellung führt, ist vorzugsweise gerade, so dass eine Geradführung ausgebildet ist. Diese ist dadurch charakterisiert, dass bei der Verlagerung der Schwellerverkleidung zwischen den ersten und zweiten Funktionsstellungen ein Punkt, vorzugsweise jeder beliebige Punkt der Koppel auf einer zumindest annährend geraden Bahn geführt wird.

Die Kinematik der erfindungsgemäßen Verkleidungseinrichtung ist vorzugsweise so ausgebildet, dass bei einer Verlagerung der Schwellerverkleidung von der ersten Funktionsstellung in die zweite Funktionsstellung und/oder von der zweiten Funktionsstellung in die erste Funktionsstellung jeweils beide Verkleidungselemente in die gleiche Richtung um die jeweilige Achse L beziehungsweise W schwenken. Ein Ineinanderklappen der Verkleidungselemente in Form von sich übereinanderlegen erfolgt also anders als im Stand der Technik nicht, was Geräuschvorteile im Betrieb haben kann.

Schließlich wird ein Ausführungsbeispiel der Verkleidungseinrichtung bevorzugt, bei dem beide Verkleidungselemente als formstabile, das heißt eigensteife Gebilde ausgebildet sind, welche anders als ein Netz, Gewebe, Gewirke oder dergleichen nicht gespannt werden müssen, um ihre Form zu erhalten beziehungsweise beizubehalten. Dies weist insbesondere auch im Fahrbetrieb bezüglich einer Verbesserung der Aerodynamik Vorteile auf.

Weitere vorteilhafte Ausführungsvarianten der Verkleidungseinrichtung ergeben sich aus den Untersprüchen und der nachfolgenden Figurenbeschreibung, gegebenenfalls in Verbindung mit der Zeichnung.

Zur Lösung der Aufgabe wird auch ein, einen auch als seitlicher Längsträger bezeichneter Seitenschweller aufweisender Personenkraftwagen vorgeschlagen, wobei der Seitenschweller mit einer Verkleidungseinrichtung nach einem der Ansprüche 1 bis 10 versehen ist. Vorzugsweise ist auch der auf der gegenüberliegenden Fahrzeugseite angeordnete, zweite Seitenschweller mit einer derartigen Verkleidungseinrichtung versehen.

Im Folgenden wird ein vorteilhaftes Ausführungsbeispiel der erfindungsgemäßen Verkleidungseinrichtung anhand der Zeichnung näher erläutert. Dabei zeigen:
- Fig. 1: eine Perspektivansicht einer Verkleidungseinrichtung für einen Seitenschweller eines Personenkraftwagens mit einer Schwellerverkleidung mit einem schwellerfesten Verkleidungselement und jeweiligen, unterhalb einer zugehörigen Türöffnung angeordneten beweglichen Verkleidungselementen und mit einer Antriebseinheit zum Verstellen der beweglichen Verkleidungselemente, welche als vormontierte Baueinheit ausgebildet und mittels einer Halteeinrichtung im Bereich des schwellerfesten Verkleidungselements angeordnet ist;
- Fig. 2: eine schematische Schnittansicht durch die Verkleidungseinrichtung und eine Seitentür eines Personenkraftwagens entlang einer in Fahrzeugquerrichtung beziehungsweise in Fahrzeughochrichtung verlaufenden Schnittebene, wobei die Schwellerverkleidung des Seitenschwellers in Fahrzeugquerrichtung in Überdeckung beziehungsweise bündig mit der dazugehörigen Türunterkante der Seitentür angeordnet ist;
- Fig. 3: eine Perspektivansicht auf die in einem Längenbereich des Seitenschwellers unterhalb einer Türöffnung angeordneten, beweglichen Verkleidungselemente, welche vorliegend in einer Verkleidungsstellung angeordnet sind, aus welcher diese in eine Einstiegsstellung verlagerbar sind;
- Fig. 4: eine Perspektivansicht auf die Verkleidungseinrichtung analog zu Fig. 3, wobei die beweglichen Verkleidungselemente in einer anfänglichen Stellung ihrer Verlagerungsbewegung aus der Verkleidungsstellung in die Einstiegsstellung gezeigt sind;
- Fig. 5: eine Perspektivansicht auf die Verkleidungseinrichtung gemäß den Fig. 3 und 4 im weiteren Verlauf der Verlagerungsbewegung der beweglichen Verkleidungselemente aus der Verkleidungsstellung in die Einstiegsstellung;
- Fig. 6: eine Perspektivansicht auf die Verkleidungseinrichtung analog den Fig. 3 bis 5, wobei die Verkleidungselemente kurz vor Erreichen der Einstiegsstellung dargestellt sind;
- Fig. 7: eine Perspektivansicht auf die Verkleidungseinrichtung gemäß den Fig. 3 bis 6, wobei die Verkleidungselemente nach Erreichen der Einstiegsstellung dargestellt sind;
- Fig. 8: eine Querschnittansicht durch die Verkleidungseinrichtung gemäß den Fig. 3 bis 7, wobei die Verkleidungselemente in der Verkleidungsstellung gezeigt sind und ein flexibles Verkleidungselement vorgesehen ist, dessen eines Ende unter Vermittlung des eigensteifen zweiten Verkleidungselement in Form eines Winkelleistenelements an dem eigensteifen ersten Verkleidungselement angeordnet ist und ein anderes Ende des flexiblen Verkleidungselements an einem Karosserieelement angeordnet ist;
- Fig. 9: eine Schnittansicht durch die Verkleidungseinrichtung analog zu Fig. 8, wobei die ersten und zweiten Verkleidungselemente in der Einstiegsstellung angeordnet sind und damit das flexible Verkleidungselement entsprechend mitverlagert ist;
- Fig. 10: in perspektivischer Darstellung einen Ausschnitt eines Ausführungsbeispiels einer Kinematik zur Steuerung der Relativbewegung des zweiten Verkleidungselements gegenüber dem ersten Verkleidungselement;
- Fig. 11: eine Schnittansicht durch die Verkleidungseinrichtung analog zu Fig. 8;
- Fig. 12: eine Schnittansicht durch die Verkleidungseinrichtung analog zu den Figuren 8, 9 und 11, wobei die beweglichen ersten und zweiten Verkleidungselemente in einer Zwischenstellung zwischen der Verkleidungsstellung und der Einstiegstellung angeordnet sind; und
- Fig. 13: in perspektivische Darstellung einen Ausschnitt der Verkleidungseinrichtung gemäß den Figuren 1 bis 12 im Bereich eines vorgesehenen Wegbegrenzungselements.

In den Figuren sind gleiche oder funktionsgleiche Teile mit den gleichen Bezugszeichen versehen.

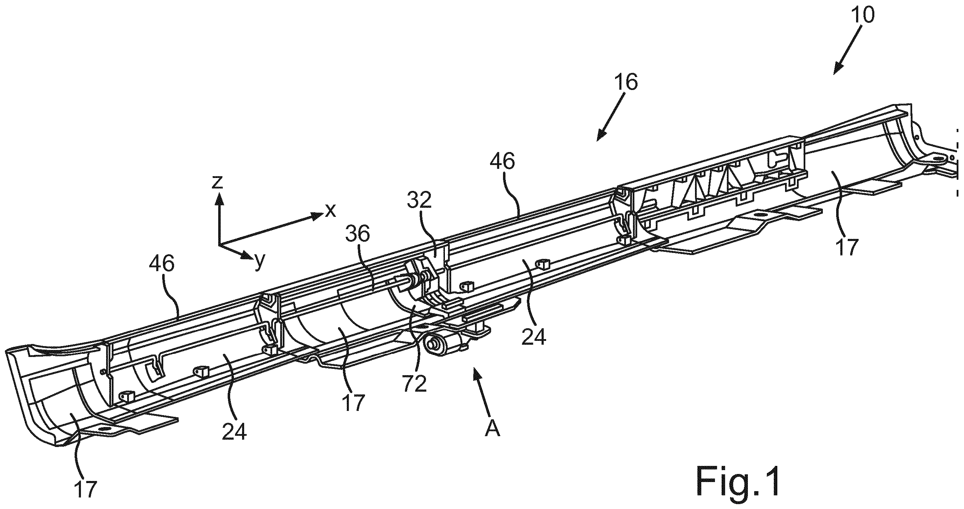

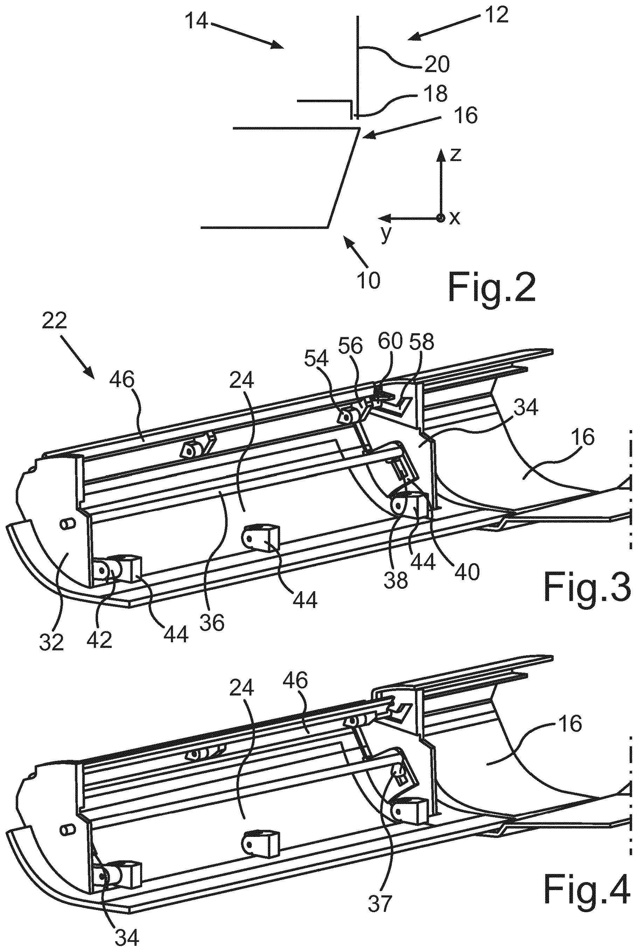

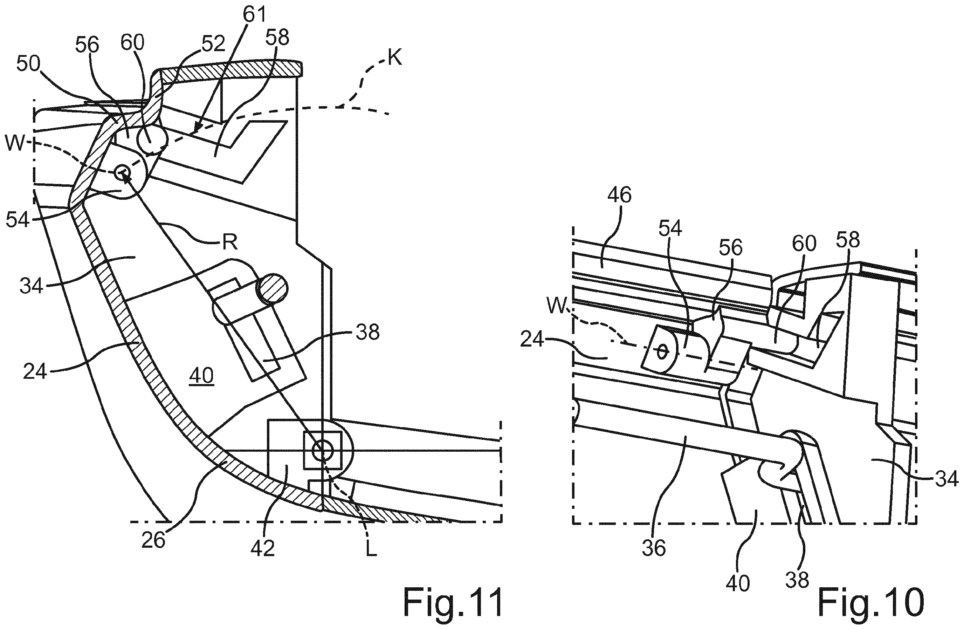

Fig. 1 zeigt in perspektivischer Darstellung ein Ausführungsbeispiel einer Verkleidungseinrichtung für einen auch als seitlichen Längsträger bezeichneten Seitenschweller 10 eines Personenkraftwagens, welche eine Schwellerverkleidung 16 mit jeweiligen schwellerfesten Verkleidungselementen 17 und jeweiligen, unterhalb einer jeweils zugehörigen Türöffnung 14 (Fig. 2) für eine vordere beziehungsweise hintere Seitentür 12 (Fig. 2) angeordneten, beweglichen ersten Verkleidungselemente 24, welche auf im Weiteren noch näher beschriebene Weise mittels einer Antriebseinheit A (Fig. 10 -12) verstellbar sind, umfasst. Die Antriebseinheit A ist dabei als vormontierte Baueinheit ausgebildet und mittels einer Halteeinrichtung 72 im Bereich des schwellerfesten Verkleidungselements 17 zwischen den beiden beweglichen ersten Verkleidungselementen 24 angeordnet ist.

Es wird ohne weiteres deutlich, dass die in Figuren dargestellte Schwellerverkleidung 16 für ein Fahrzeug konzipiert ist, welches zumindest auf einer Fahrzeugseite zwei seitliche Einstiegstüren aufweist, wobei jeder Türöffnung jeweils ein bewegliches erstes Verkleidungselement 24 zugeordnet ist. Bei einem anderen, in den Figuren nicht dargestellten Ausführungsbeispiel der Verkleidungseinrichtung weist die Schwellerverkleidung 16 lediglich ein solches, vorzugsweise der Fahrer- oder der Beifahrertür zugeordnetes, bewegliches erstes Verkleidungselement 24 und zumindest ein schwellerfestes Verkleidungselement 17 auf, unabhängig davon, ob das Fahrzeug auf jeder Seite nur eine Tür oder zwei Türen aufweist. Das beziehungsweise die schwellerfesten Verkleidungselemente 17 überdecken dann den übrigen Teil des Schwellers links und rechts beziehungsweise vor und/oder hinter dem beweglichen ersten Verkleidungselement 24.

In Fig. 2 ist in einer stark schematisierten Schnittansicht entlang einer Fahrzeughochrichtung (z-Richtung) beziehungsweise in Fahrzeugquerrichtung (y-Richtung) verlaufenden Schnittebene die Schwellerverkleidung 16 für den nicht näher dargestellten, sich bei selbsttragenden Karosserie eines Personenkraftwagens sich jeweils längs unterhalb des Türeinstieges beziehungsweise der Türeinstiege zwischen den Radkästen vorn und hinten angeordneten Seitenschweller 10 sowie die oberhalb davon angeordnete, ausschnittsweise erkennbare Seitentür 12 zum Verschließen einer korrespondierenden Türöffnung 14 dargestellt. Hierbei ist erkennbar, dass die Schwellerverkleidung 16 sich in Fahrzeugquerrichtung (y-Richtung) soweit nach außen hin erstreckt, dass diese - im geschlossenen Zustand der Seitentür 12 - eine zugehörige Türunterkante 18 beziehungsweise eine Außenverkleidung 20 der Seitentür 12 überragt oder zumindest bündig mit dieser abschließt. Eine derartige Erstreckung der äußeren Schwellerverkleidung 16 hat dabei den Vorteil, dass durch die - bezogen auf die in Fahrzeugquerrichtung (y-Richtung) - unterseitige Überdeckung der Türunterkante 18 beziehungsweise der gesamten Seitentür 12 Beschädigungen durch Steinschläge oder generell Verschmutzungen der Türunterkante 18 beziehungsweise eines gesamten unteren Bereichs der Seitentür 12 vermieden werden können.

Die generelle Ausgestaltung des beschriebenen Seitenschwellers 10 beziehungsweise insbesondere der äußeren Schwellerverkleidung 16 wirft aber die Problematik eines erschwerten Ein- und Ausstiegs über die Türöffnung 14 in den Kraftwagen hinein beziehungsweise aus diesem heraus auf, und zwar insbesondere für kleiner und/oder ältere Menschen oder für Menschen mit eingeschränkter Mobilität. Die Problematik verschärft sich hierbei, wenn die Fahrzeugtür 12 beispielsweise bei beengten Parkverhältnissen nicht weit genug geöffnet werden kann. Insbesondere bei derartigen Situationen kann es zu einem unbequemen Ein- und Ausstieg beziehungsweise zu damit einhergehenden Verschmutzungen der Kleidung, insbesondere der Hosenbeine kommen.

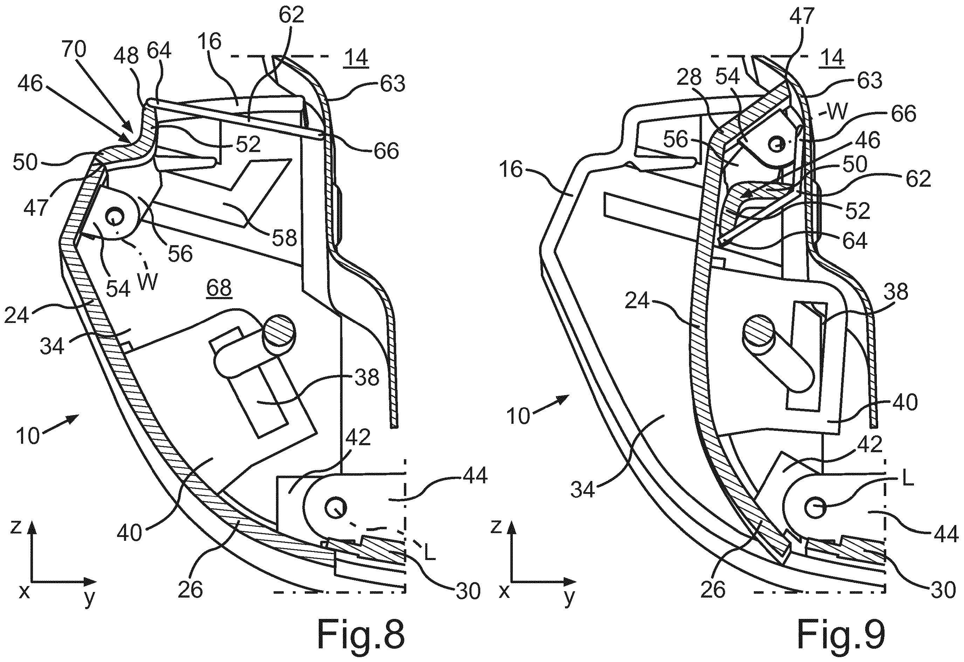

In den Fig. 3 bis 7 ist in jeweiligen Perspektivansichten beziehungsweise in den Fig. 8 und 9 in jeweiligen Schnittansichten entlang einer in Fahrzeughochrichtung (z-Richtung) beziehungsweise in Fahrzeugquerrichtung (y-Richtung) verlaufenden Schnittebene die im Zusammenhang mit Fig. 1 und Fig. 2 erläuterte Schwellerverkleidung 16 erkennbar, welche beispielsweise aus einem Kunststoffmaterial gebildet ist und mittels welcher ein rohbauseitiges Karosserieelement 63 (Fig. 8, 9), welches der Seitenschweller und/oder ein Teil einer Seitenwand des Kraftwagens sein kann, nach außen beziehungsweise nach unten hin - also in Fahrzeugquerrichtung (y-Richtung) und in Fahrzeughochrichtung (z-Richtung) - abgedeckt beziehungsweise überdeckt ist.

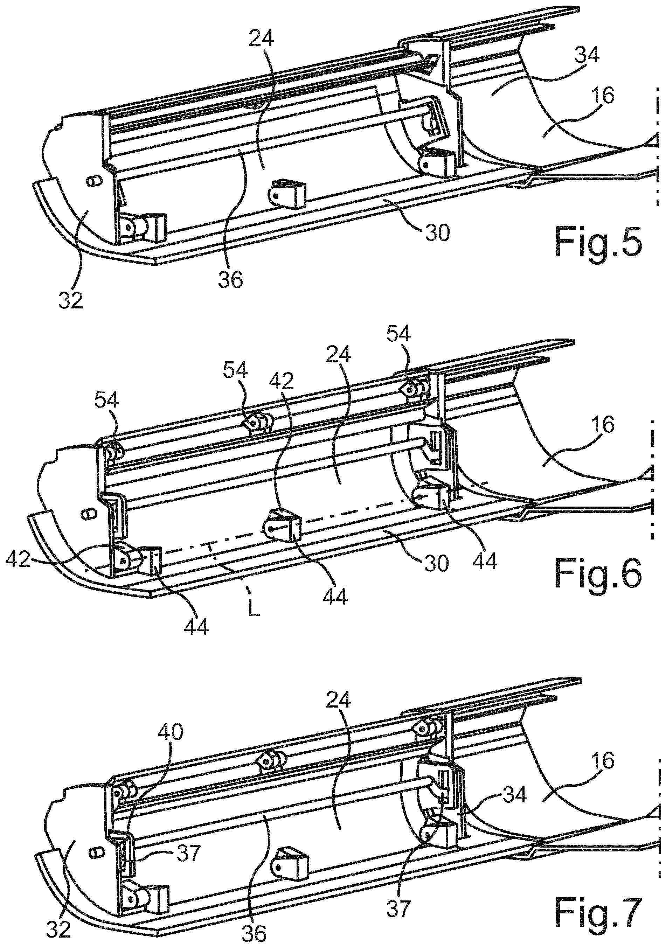

Jedes der beiden beweglichen, in Fahrzeuglängsrichtung in einem Abstand voneinander angeordneten ersten Verkleidungselemente 24 ist zwischen einer in Fig. 3 dargestellten Verkleidungsstellung, welches bei dem hier beschriebenen Ausführungsbeispiel der Verkleidungseinrichtung eine erste Funktionsstellung ist, und einer in Fig. 7 erkennbaren Einstiegsstellung, welches im Rahmen der Erfindung auch als zweite Funktionsstellung bezeichnet wird, auf im Weiteren noch näher beschriebene Weise verlagerbar. Die Fig. 4 bis 6 zeigen dabei Zwischenstellungen des ersten Verkleidungselements 24, welches dieses bei seiner Verlagerungsbewegung zwischen der Verkleidungsstellung (Fig. 1 und 3) und der Einstiegsstellung (Fig. 7) einnimmt. Überdies zeigen die Fig. 8 und 9 das bewegliche erste Verkleidungselement 24 in seinen beiden Endstellungen, nämlich der Verkleidungsstellung in Fig. 8 und der Einstiegsstellung in Fig. 9.

Wie hierbei insbesondere in Zusammenschau der Fig. 8 und 9 erkennbar ist, ist das eigensteife, das heißt formstabile bewegliche erste Verkleidungselement 24 um eine in Erstreckungsrichtung und damit in oder zumindest im Wesentlichen in Fahrzeuglängsrichtung (x-Richtung) verlaufende Lagerachse L schwenkbar, welche sich in einem unteren Teilbereich 26 des ersten Verkleidungselements 24 befindet. Entsprechend ist insbesondere in Zusammenschau der Fig. 8 und 9 auch erkennbar, dass eine Verlagerung des ersten Verkleidungselements 24 aus der Verkleidungsstellung (Fig. 8) in die Einstiegsstellung (Fig. 9) dazu führt, dass dieses über die zumindest annähernd gesamte Höhe des Seitenschwellers 10 beziehungsweise der Schwellerverkleidung 16 in Fahrzeugquerrichtung (y-Richtung) nach innen verlagert wird, um hierdurch den Ein- und Ausstieg eines Passagiers über die entsprechende Türöffnung 14 zu vereinfachen, indem die in Fahrzeugquerrichtung gemessene lichte Breite der Schwellerverkleidung 16 beziehungsweise der vom ersten Verkleidungselement 24 beanspruchte Raum zwischen dessen Außenseite und der Schwelleraußenseite verringert wird. Der beim Ein- und Aussteigen vom Insassen zu überwindende "Steg" im Bereich der Türöffnung 14 ist also entsprechend verkleinert und damit einfacher zu übersteigen, ohne dabei mit der Bekleidung darüber zu streichen.

Weiterhin ist insbesondere aus Fig. 9 erkennbar, dass ein oberer Teilbereich 28 des beweglichen ersten Verkleidungselements 24 soweit zur Fahrzeugmitte hin verlagert wird, bis dieses zumindest annähernd in Anlage mit einem Karosserieelement 63 kommt, welches im vorliegenden Fall ein Abschnitt einer Karosserieseitenwand ist, die im Bereich des Seitenschwellers 10 diesen von oben und gegebenenfalls auf dessen Außenseite zumindest teilweise überdeckt.

Wie insbesondere aus den Fig. 3 bis 7 erkennbar ist, umfasst die Verkleidungseinrichtung ein schalenförmiges, im Querschnitt gesehen eine entsprechende Krümmung aufweisendes Verkleidungsteil 30, in welches das bewegliche erste Verkleidungselement 24 in seiner Verkleidungsstellung zumindest im Wesentlichen flächenbündig integriert ist. Dieses Verkleidungsteil 30 ist dabei überlappend mit dem hier gezeigten vorderen, festen Verkleidungselement 17 der Schwellerverkleidung 16 sowie dem in Fig. 1 gezeigten mittleren Verkleidungselement 17 angeordnet. Im am Personenkraftwagen verbauten Zustand der Verkleidungseinrichtung ist das Verkleidungsteil 30 ortsfest am Seitenschweller 10 oder an einem Schweller nahen Bereich befestigt, so dass bei einem Verschwenken des ersten Verkleidungselements 24 um die Lagerachse L zwischen seiner Verkleidungs- und Einstiegsstellung dabei das Verkleidungsteil 30 lagefest, das heißt unbeweglich gegenüber dem Seitenschweller 10 bleibt.

Von dem Verkleidungsteil 30 stehen dabei - in Längserstreckung des Verkleidungselements 24 gesehen - vorder- und rückseitig des Verkleidungselements 24 jeweilige Lagerstege 32, 34 ab, welche sich zumindest im Wesentlichen in Fahrzeughochrichtung (z-Richtung) und in Fahrzeugquerrichtung (y-Richtung) erstrecken, so dass sich insgesamt ein zumindest im Wesentlichen U-förmiger Grundkörper für das feststehende Verkleidungsteil 30 ergibt, wobei die Lagerstege 32, 34 die Seitenwangen des U-förmigen Grundkörper bilden. Die Lagerstege 32, 34 erstrecken sich bei dem in den Figuren dargestellten Ausführungsbeispiel der Verkleidungseinrichtung - im Querschnitt durch die Schwellerverkleidung 16 gesehen - über die gesamte Höhe der Schwellerverkleidung 16, insbesondere über die gesamte Innenseite des ortsfesten Verkleidungselements 17, wie ohne weiteres aus den Figuren 8 und 9 ersichtlich, und füllen den Querschnitt der Schwellerverkleidung 16 in diesem Bereich, ähnlich wie Schottwände, im Wesentlichen größtenteils aus.

An den Lagerstegen 32, 34 ist eine Antriebswelle 36 drehbeweglich gelagert, welche sich in oder zumindest aber im Wesentlichen in Fahrzeuglängsrichtung (x-Richtung) und etwa horizontal erstreckt. Diese Antriebswelle 36 umfasst in ihren jeweiligen, den Lagerstegen 32, 34 nahen Endbereichen eine entsprechende, U-förmige Kröpfung 37, welche mit einer zugeordneten, schlitzförmigen Kulisse 38 eines entsprechenden Kulissenelements 40 in Eingriff ist, welches seinerseits innenseitig des Verkleidungselements 24 an dessen vorderen beziehungsweise hinteren Ende befestigt ist. Eine Rotation der Antriebswelle 36 bewirkt demzufolge durch das Zusammenwirken der jeweiligen Kröpfung 37 mit der entsprechenden Kulisse 38 des entsprechenden Kulissenelements 40 die gewünschte Verlagerungsbewegung des schwenkbaren ersten Verkleidungselements 24 zwischen der Verkleidungsstellung gemäß Fig. 3 und 8 und der Einstiegsstellung gemäß Fig. 7 und 9 um die Lagerachse L.

Des Weiteren ist aus den Fig. 3 bis 7 erkennbar, dass die Lagerachse L des ersten Verkleidungselements 24 vorliegend durch jeweilige Lagerelemente 42, 44 definiert ist, welche einerseits innenseitig des Verkleidungselements 24 befestigt sind (Lagerelemente 42) und andererseits innenseitig des Verkleidungsteils 30 (Lagerelemente 44). Jedes dieser Paare von Lagerelementen 42, 44 ist hierbei durch einen Bolzen oder dergleichen miteinander schwenkbeweglich verbunden, wobei die Bolzen dieser Paare von Lagerelementen 42, 44 die Lagerachse L des Verkleidungselements 24 bilden. Wie insbesondere aus Figur 1 ersichtlich, weist jedes der schwenkbeweglich am Verkleidungsteil 30 beziehungsweise an zugeordneten Verkleidungsteilen 30 gelagerten ersten Verkleidungselemente 24 insgesamt drei Lagerstellen mit jeweils einem Paar von Lagerelementen 42, 44 sowie diese miteinander koppelnden Bolzen auf, wobei die Bolzen - in Längserstreckungsrichtung der Schwellerverkleidung 16 gesehen - alle in fluchtender Anordnung zueinander angeordnet sind und so die Lagerachse L definieren beziehungsweise bilden. Jede dieser Lagerstellen ist also als Gelenk ausgebildet.

Die Anzahl der Lagerstellen kann variieren, so dass bei einem anderen Ausführungsbeispiel der Verkleidungseinrichtung auch weniger als drei oder mehr als drei Lagerstellen für das schwenkbewegliche erste Verkleidungselement 24 vorgesehen sein können.

Wie insbesondere aus den Fig. 8 und 9 außerdem erkennbar ist, ist am oberen Endbereich 27 des Verkleidungselements 24 ein bewegliches zweites Verkleidungselement 46 verlagerbar gehalten, welches sich in der Verkleidungsstellung gemäß Fig. 7 entlang einer oberen Endkante 48 des ersten Verkleidungselements 24 erstreckt und welches auf im Weiteren noch näher beschriebene Weise zwangsgesteuert während der Verlagerungsbewegung des ersten Verkleidungselements 24 aus der Verkleidungsstellung in die Einstiegsstellung - und zurück - ebenfalls in seine Einstiegsstellung gemäß Fig. 8 verlagert wird. In der Verkleidungsstellung gemäß Fig. 7 ist das bewegliche zweite Verkleidungselement 46 demzufolge oberseitig des ersten Verkleidungselements 24 angeordnet. Bei dem in den Figuren dargestellten Ausführungsbeispiel der Verkleidungseinrichtung ist das am ersten Verkleidungselement 24 schwenkbar gehaltene zweite Verkleidungselement 46 als Winkelleistenelement ausgebildet, das heißt es ist - wie insbesondere aus der Querschnittdarstellung gemäß den Figuren 8 und 9 ersichtlich - L-förmig ausgebildet und erstreckt sich mit einem Schenkel 50 horizontal und in Fahrzeugquerrichtung (y-Richtung) nach außen, und mit einem Schenkel 52 zumindest im Wesentlichen vertikal und in Fahrzeughochrichtung (z-Richtung) nach oben. In den von den Schenkeln 50, 52 teilweise eingerahmten, ansonsten nach außen hin offenen Freiraum (Aufnahmevertiefung 70) ragt bei in Verkleidungsstellung angeordneter Schwellerverkleidung 16 und gleichzeitig geschlossener Seitentür 12 deren Unterkantenbereich zumindest teilweise hinein beziehungsweise ist nach unten hin vom Schenkel 50 des Winkelleistenelements überdeckt. Deutlich wird, dass das erste Verkleidungselement 24 flächenmäßig deutlich größer ist als das daran gelagerte zweite Verkleidungselement 46, wobei die erforderliche lichte Höhe des zweiten Verkleidungselements 46 maßgeblich davon bestimmt wird, wie weit das erste Verkleidungselement 24 in Richtung hin zu einem Fahrgastraum um die Lagerachse L geklappt werden soll, worauf im Folgenden noch näher eingegangen wird.

Bei in Verkleidungsstellung befindlicher Schwellerverkleidung 16, wie sie in Figur 8 dargestellt ist, grenzt der Schenkel 50 des zweiten Verkleidungselements 46 unmittelbar an eine obere Längsrandkante 47 des ersten Verkleidungselements 24 an, vorzugsweise derart, dass zur Außenseite der Schwellerverkleidung 16 keine Kante zwischen diesen Verkleidungselementen gebildet ist. Die Formgebung der beiden Verkleidungselemente 24, 46 ist in deren zugewandten Randbereichen entsprechend gewählt, wie beispielsweise dargestellt.

In der Einstiegsstellung gemäß Fig. 9 ist das zweite Verkleidungselement 46 im Wesentlichen unterhalb des oberen Endbereichs 28 des ersten Verkleidungselements 24 angeordnet, wobei sich der Schenkel 52 in Fahrzeughochrichtung (z-Richtung) nach unten und der Schenkel 50 in Fahrzeugquerrichtung (y-Richtung) nach innen erstreckt.

Die Verlagerungsbewegung des zweiten Verkleidungselements 46 zwischen seinen beiden Endstellungen - der Einstiegsstellung und der Verkleidungsstellung - erfolgt dabei zwangsgesteuert mittels der Kulisse 58 bei beziehungsweise durch die Verlagerungsbewegung des ersten Verkleidungselements 24. Dabei ist das zweite Verkleidungselement 46 über jeweilige Lagerelemente 54, 56, welche innenseitig des ersten Verkleidungselements 24 (Lagerelement 54) beziehungsweise innenseitig des zweiten Verkleidungselements 46 (Lagerelement 56) angeordnet sind, um eine Lagerachse W verlagerbar. Das zumindest mittelbar, vorzugsweise direkt am ersten Verkleidungselement 24 angebrachte oder ausgebildete Lagerelement 54 ist in der Art eines Lagerbocks ausgebildet und dient der ortsfesten, schwenkbeweglichen Lagerung des anderen, einenends zumindest mittelbar, vorzugsweise direkt am zweiten Verkleidungselement 46 angebrachten oder ausgebildeten Lagerelements 56, das seinerseits als Verbindungsglied, welches hier ähnlich einer beziehungsweise als Koppel ausgebildet ist, dient.

Jeder der Lagerstege 32, 34 umfasst zudem an der jeweiligen, dem ersten Verkleidungselement 24 zugewandten Innenseite eine Kulisse 58, welche vorliegend etwa L-förmig gestaltet ist und in welche ein Lagerzapfen 60 der jeweils zugehörigen Koppel 56, welche mit dem zweiten Verkleidungselement 46 in Verbindung steht, in Eingriff ist. Die Kulisse 58 ist bei diesem Ausführungsbeispiel als Geradführung ausgebildet und weist einen ersten geraden Führungsabschnitt 61 auf, welcher - mit Blickrichtung in Fahrzeuglängsrichtung (x-Richtung) gemäß der Darstellung der Figuren 8 und 9 - von außen oben in Richtung zur Fahrgastzelle des Kraftwagens hin nach innen unten verläuft. Das heißt also, die mittels des ersten Führungsabschnitts der Kulisse 58 gebildete Geradführung fällt also zur Kraftwagenmitte hin schräg nach unten hin in Richtung auf eine Fahrbahn hin ab. Am Ende des ersten Führungsabschnitts 61 der Kulisse 58 schließt sich ein zweiter Führungsabschnitt der Kulisse 58 an, welcher bei diesem Ausführungsbeispiel ebenfalls als Geradführung ausgebildet ist und mit dem ersten Führungsabschnitts 61 der Kulisse 58 einen Winkel von hier größer 90° einschließt. Das bedeutet, dass der zweite Führungsabschnitt ausgehend von einem Ende des ersten Führungsabschnitts 61 schräg nach innen und nach oben verläuft.

Der zweite Führungsabschnitt der Kulisse 58 dient letztlich nur als Toleranzausgleich, das heißt, der Lagerzapfen 60 kann in den zweiten Führungsabschnitt hinlaufen, wenn die Verkleidungselemente 24, 46 in die zweite Funktionsstellung verlagert werden. Im Idealfall fährt der Lagerzapfen 60 nach Durchlaufen des ersten Führungsabschnitts der Kulisse 58 lediglich in den Eckbereich zwischen den beiden, zusammen eine L-Form aufweisenden Führungsabschnitten der Kulisse 58, und bleibt dort hineingedrängt, während sich das zweite Verkleidungselement 46 weiter um die Lagerachse W drehen kann.

Eine Zusammenschau der Fig. 3 bis 7 zeigt hierbei, dass der Lagerzapfen 60 bei der Verlagerungsbewegung des ersten Verkleidungselements 24 entlang der L-förmigen Kulisse 58 läuft und somit die Verlagerungs- beziehungsweise Schwenkbewegung des zweiten Verkleidungselement 46 aus dessen Verkleidungsstellung in die dessen Einstiegsstellung bewirkt.

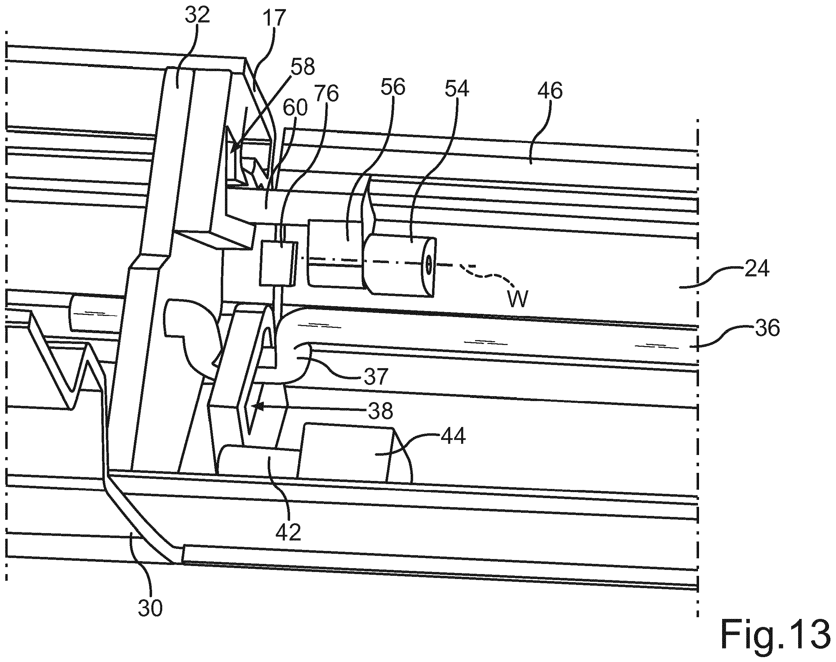

Festzuhalten bleibt, dass bei einer Verstellung der Schwellerverkleidung 16 das erste Verkleidungselement 24 um eine gegenüber dem Seitenschweller 10 und damit karosserieseitig ortsfeste Schwenkachse, die oben allgemein als Lagerachse L bezeichnet wurde, verschwenkt wird. Die einzelnen Punkte des ersten Verkleidungselements 24 bewegen sich also entlang einer Kreisbogenbahn K (Figur 11) mit dem Mittelpunkt in der Schwenkachse/Lagerachse L, welche die bei diesem Ausführungsbeispiel der Verkleidungseinrichtung als Geradführung ausbildete gerade Bewegungsbahn der Kulisse 58 schneidet. Dieser Bewegung ist die Schwenkbewegung des am ersten Verkleidungselement 24 um die Schwenkachse/Lagerachse W beweglich gelagerten zweiten Verkleidungselements 46, welches hier - anders als ein Netz oder Gewebe oder dergleichen - als formstabiles, das heißt zumindest weitestgehend starres beziehungsweise stabiles Gebilde in Form eines Winkelleistenelements ausgebildet ist, überlagert. Die Schwenkbewegung des einen zur Seitentür 14 hin bildenden Abschlusses des ersten Verkleidungselements 24 bildenden zweiten Verkleidungselements 46 ist bestimmt und initiiert durch die Zwangsführung der ein Verbindungsglied bildenden Koppel 56 in der Kulisse 58. Dabei führt - gemäß der Darstellung und Ansicht der Figuren 8 und 9 - das Verschwenken des ersten Verkleidungselements 24 im Uhrzeigersinn um die Achse L sowohl zu einer translatorischen Verlagerung des zweiten Verkleidungselements 46 nach rechts als auch gleichzeitig zu einem Verschwenken desselben im Uhrzeigersinn um die Achse W. Das bedeutet, wie ohne weiteres aus den Figuren ersichtlich, dass das zweite Verkleidungselement 46 sich zum ersten Verkleidungselement 24 quasi eindreht, was ohne weiteres auch bei einem Vergleich der Figuren 8, 9 und 12 deutlich wird, und gegenüber der oberen Längsrandkante 47 des ersten Verkleidungselements 24 in eine tieferliegende Position im Zwischenraum zwischen dem ersten Verkleidungselement 24 und dem Karosserieelement 63 bewegt. Das Eindrehen des zweiten Verkleidungselements 46 und damit auch die Verstellung des ersten Verkleidungselements 24 endet dann, wenn beispielsweise eines der Verkleidungselemente 24, 46 gegen einen Anschlag (beispielsweise 76, Figur 13) fährt und/oder durch Abschalten eines Motors des Antriebs A.

Figur 13 zeigt einen solchen Anschlag 76 zur Begrenzung der Schwenkbewegung der ersten und zweiten Verkleidungselemente 24, 46. Bei diesem Ausführungsbeispiel ist der Anschlag 76 in Form einer auf die Innenseite des ersten Verkleidungselements 24 angebrachten Platte beziehungsweise Plättchen ausgeführt, welche im randnahen Bereich zum schwellerfest angeordneten Verkleidungselement 17 angeordnet ist und über den Rand des ersten Verkleidungselements 24 übersteht und sich damit - in Schwenkrichtung des von der Einstiegsstellung in seine erste Funktionsstellung (Verkleidungsstellung) gesehen - in Überlappstellung mit dem unbeweglichen Verkleidungselement 17 der Schwellerverkleidung 16 befindet. Das Verschwenken des ersten Verkleidungselements 24 und damit auch des zweiten Verkleidungselements 46 endet dann, wenn der Anschlag 71 gegen die Innenwand des lagefesten Verkleidungselements 17 fährt. Diese Ausführungsform der Schwenkwinkelbegrenzung des ersten Verkleidungselements 24 ist besonders einfach und kostengünstig sowie funktionell. Sie ermöglicht ohne weitere Einstell-/Justiermaßnahmen, dass das erste Verkleidungselement 24 in seiner ersten Funktionsstellung (Verkleidungsstellung) stufenlos, das heißt bündig mit seiner Außenseite zum benachbart angeordneten Verkleidungselement 17 beziehungsweise dessen Außenseite angeordnet ist. Hierzu müssen nur die beiden Verkleidungselemente 17, 24 in ihren einander angrenzenden Bereichen die gleiche Dicke aufweisen und/oder der Anschlag 76 entsprechend ausgebildet sein.

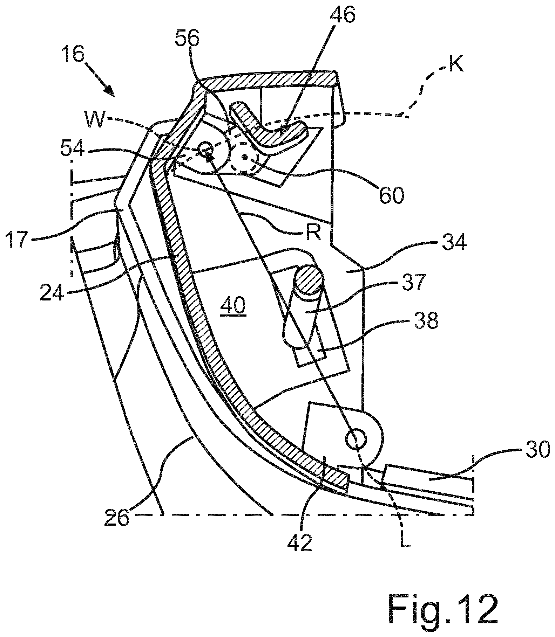

Bei dem in Figur 9 dargestellten Ausführungsbeispiel der Verkleidungsrichtung könnte das Ende des Verschwenkens der Verkleidungselemente 24, 46 ohne weiteres beispielsweise durch Anschlagen der Längsrandkante 47 des ersten Verkleidungselements 24 am Karosserieelement 63 oder durch das Anschlagen des Schenkels 52 des zweiten Verkleidungselements 46 an der Innenwand des ersten Verkleidungselements 24 oder durch das Anschlagen des Schenkels 50 des zweiten Verkleidungselements 46 am Karosserieelement 63 erfolgen. Denkbar ist auch, dass das Ende der Schwenkbewegung durch ein Anschlagen der Antriebswelle 36 am Ende der Kulisse 38 erfolgt. Bei dem in Figur 12 dargestellten Ausführungsbeispiel der Verkleidungseinrichtung ist jedoch vorgesehen, dass in der ersten Funktionsstellung der Schwellerverkleidung 16, wie in Figur 12 dargestellt, die Antriebswelle 36 nicht am Ende der Kulisse 38 anschlägt, sondern noch ein Freiraum zum Ende der Kulisse 38 besteht. In dieser Endstellung ist die Antriebswelle 36 in einer Übertotpunktlage angeordnet, das heißt, dass falls die Schwellerverkleidung 16 von außen mit einer Kraft beaufschlagt wird, beispielsweise wenn eine Person auf die in erster Funktionsstellung angeordneter Schwellerverkleidung drauftritt, die Schwellerverkleidung nicht in die zweite Funktionsstellung gedrückt wird. Vielmehr läuft die Antriebswelle 36 in der Kulisse 38 weiter, bis sie an deren Ende anschlägt. Damit lässt sich das erste Verkleidungselement 24 lediglich ein geringes Stück zurückdrücken, bis der Antrieb A vollends blockiert.

Fig. 8 verdeutlicht, dass ein flexibles Verkleidungselement 62 vorgesehen ist, dessen eines Ende 64 zumindest mittelbar - nämlich im vorliegenden Fall unter Vermittlung des zweiten Verkleidungselements 46 - an dem eigensteifen ersten Verkleidungselement 24 angeordnet ist. Das andere Ende 66 des flexiblen Verkleidungselements 62 ist im vorliegenden Fall am Karosserieelement 63, also der Kraftwagenseitenwand befestigt. Gemäß Fig. 8 deckt somit das flexible Verkleidungselement 62 bei in Verkleidungsstellung angeordneter Schwellerverkleidung 16 einen Freiraum 68 zwischen dem sich in der Verkleidungsstellung befindenden eigensteifen ersten Verkleidungselement 24 und dem Karosserieelement 63 ab. Das flexible Verkleidungselement 62, welches wie vorstehend beschrieben eine obere Abdeckung bildet, ist im vorliegenden Fall aus einem Stoffmaterial, beispielsweise einer Stoffbahn, wie diese bei Verdecken von Cabriolets zum Einsatz kommt, gebildet. Das flexible Verkleidungselement 62 ist in der Verkleidungsstellung in einem durch die zugeordnete Fahrzeugtür überdeckten Bereich des Seitenschwellers 10 angeordnet. Dabei ist das Verkleidungselement 62 bei in Verkleidungsstellung angeordneter Schwellerverkleidung 16 quasi aufgespannt, das heißt es deckt faltenfrei den darunter angeordneten Freiraum 68 ab und verhindert so einerseits das Eindringen von Verschmutzungen und andererseits das Einströmen von Luft während des Fahrbetriebs des Kraftwagens, was zu störenden Geräuschen führen könnte.

Das zweite, vorzugsweise formstabile Verkleidungselement 46 ist so ausgebildet und in seiner Verkleidungsstellung gemäß Fig. 8 angeordnet, dass dieses eine Aufnahmevertiefung 70 für die Türunterkante 18 der zugehörigen Seitentür 12 aufweist. Somit sind ein nochmals verbesserter Schutz der Türunterkante 18 sowie eine verbesserte Aerodynamik des Fahrzeugs gewährleistet. Durch das Verlagern des zweiten Verkleidungselements 46 zwischen dessen Verkleidungsstellung gemäß Fig. 8 und dessen Einstiegsstellung gemäß Fig.9 wird zudem erreicht, dass das erste Verkleidungselement 24 bereits vor einer Öffnung der Seitentür 12 verlagert werden kann. Die Kinematik der Antriebswelle 36 im Zusammenspiel mit den jeweiligen Kulissen 38 in den entsprechenden Kulissenelementen 40 ist so ausgebildet, dass in beiden Endlagen - der Einstiegsstellung und der Verkleidungsstellung - jeweils ein Totpunkt überwunden wird, um das erste Verkleidungselement 24 sicher in den entsprechenden Positionen zu halten. In einem dieser Fälle oder beiden Fällen kann hierbei ein jeweiliger Anschlag vorgesehen sein, um die Position zusätzlich zu sichern. Alternativ ist es möglich, dass eine Endlagensicherung durch einen selbsthemmenden Antrieb oder dergleichen realisiert wird. Wichtig ist, dass eine ungewollte Verstellung der ersten und zweiten Verkleidungselemente 24, 46 durch Krafteinwirkung von außen, beispielsweise beim Drauftreten des Kraftwagennutzers beim Ein- und/oder Aussteigen oder eine Aktivierung des Antriebs vermieden wird.

Der Antrieb des vorderen und des hinteren beweglichen ersten Verkleidungselements 24 und des jeweils zugehörigen zweiten Verkleidungselements 46 erfolgt im vorliegenden Fall elektromotorisch durch die Antriebseinheit A. Hierzu weist diese vorzugsweise als Elektromotor ausgebildeten Motor auf, welcher mittels von Befestigungselementen an einer Halteeinrichtung gelagert ist, die ihrerseits in der Schwellerverkleidung fixiert ist, indem bei dem in den Figuren dargestellten Ausführungsbeispiel der Verkleidungseinrichtung diese auf der Innenseite des schwellerfesten, mittleren Verkleidungselements beispielsweise durch Kleben, Schweißen oder mittels mechanischer Halteelemente befestigt wird.

In den Figuren 10 bis 13 ist aus Gründen der besseren Sichtbarkeit der Kinematik der ersten und zweiten Verkleidungselemente 24, 46 das flexible Verkleidungselement 62 weggelassen.

Fig. 10 zeigt in perspektivischer Darstellung einen Ausschnitt der Verkleidungseinrichtung im Bereich des eine Kulisse 58 aufweisenden Lagerstegs 34. Zu erkennen ist, dass der Lagersteg 34 im Bereich der Kulisse 58 eine größere Dicke aufweist als in einem darunter befindlichen Abschnitt. Der Lagersteg 34 kann hierbei einstückig ausgebildet sein, wie dargestellt.

Figur 13 zeigt in perspektivische Darstellung einen Ausschnitt der Verkleidungseinrichtung am anderen Lagersteg 32, der ebenfalls mit einer Kulisse 58 versehen ist. Zu erkennen ist, dass die Materialdopplung des Lagerstegs 32 im Bereich der Kulisse 58 hier durch ein separates, die Kulisse 58 aufweisendes, plattenförmiges Teil realisiert ist.

In Figur 12 ist das besonders gut erkennbar, wie das zweite Verkleidungselement 46 bei seiner Verlagerung in die beziehungsweise seine zweite Funktionsstellung verschwenkt und gleichzeitig von einem höherliegenden Niveau auf tieferliegendes Niveau abgesenkt sowie gleichzeitig translatorisch in Fahrzeugquerrichtung nach innen verlagert wird. Sobald der Lagerzapfen 60 in die Ecke zwischen den beiden Führungsabschnitten der Kulisse 58 einfährt, wird das zweite Verkleidungselement 46 bei einem weitergehenden Schwenken des ersten Verkleidungselements 24 um die Achse L nur noch um die Achse W weiterverschwenkt.

Festzuhalten bleibt, dass bei der anhand der Figuren beschriebenen, besonders vorteilhaften Ausführungsform der Verkleidungseinrichtung das bewegliche zweite Verkleidungselement 46 an seinen beiden längsseitigen Enden mittels jeweils einer Kulisse 58 zwangsgeführt ist. Grundsätzlich ist es jedoch auch möglich, dass das zweite Verkleidungselement 46 lediglich mittels einer Kulisse 58 zwangsgeführt wird.

## Patentansprüche

1. Verkleidungseinrichtung für einen Seitenschweller (10) eines Personenkraftwagens, mit einer Schwellerverkleidung (16), welche in einem Längenbereich (22) des Seitenschwellers (10) unterhalb einer Türöffnung (14) angeordnete, beweglich miteinander gekoppelte, erste und zweite Verkleidungselemente (24, 46) umfasst, und mit einer Antriebseinheit (A), mittels welcher die Verkleidungselemente (24, 46) gemeinsam zwischen einer ersten Funktionsstellung und einer zweiten Funktionsstellung verlagerbar sind, wobei das erste Verkleidungselement (24) um eine erste Achse (L) und das zweite Verkleidungselement (46) um eine zweite Achse (W) schwenkbar sind, wobei
das zweite Verkleidungselement (46) mittels einer Lagereinrichtung am ersten Verkleidungselement (24) um die zweite Achse (W) schwenkbar gelagert und
die Verlagerungsbewegung des zweiten Verkleidungselements (46) relativ gegenüber dem ersten Verkleidungselement (24) mittels einer Kulisse (58) zwangsgesteuert ist, **dadurch gekennzeichnet,**
**dass** die Lagereinrichtung eine Koppel (56) umfasst, welche um die zweite Achse (W) schwenkbar am ersten Verkleidungselement (24) gelagert und mit dem zweiten Verkleidungselement (46) verbunden ist.

2. Verkleidungseinrichtung nach Anspruch 1,
**dadurch gekennzeichnet, dass**
die Koppel (56) mittels der Kulisse (58) geführt ist.

3. Verkleidungseinrichtung nach einem der vorhergehenden Ansprüche,
**dadurch gekennzeichnet, dass**
die Kulisse (58) zumindest einen Führungsabschnitt (61) aufweist, der -in Kraftwagenlängsrichtung (x-Richtung) gesehen- von außen oben in Richtung zur Kraftwagenmitte hin schräg nach unten verläuft

4. Verkleidungseinrichtung nach einem der vorhergehenden Ansprüche,
**dadurch gekennzeichnet, dass**
die Kulisse (58) an einem gegenüber dem Seitenschweller(10) lagefest angeordneten Lagersteg (32,34) vorgesehen ist.

5. Verkleidungseinrichtung nach einem der vorhergehenden Ansprüche,
**dadurch gekennzeichnet, dass**
die zweite Achse (W) ortsfest am ersten Verkleidungselement (24) vorgesehen ist.

6. Verkleidungseinrichtung nach einem der vorhergehenden Ansprüche,
**dadurch gekennzeichnet, dass**
das erste Verkleidungselement (24) um die erste Achse (L) entlang einer Kreisbogenbahn (K) mit dem Radius (R) verlagerbar ist und dass die Kreisbogenbahn (K) die Kulisse (58) schneidet.

7. Verkleidungseinrichtung nach einem der vorhergehenden Ansprüche,
**dadurch gekennzeichnet, dass**
in der ersten Funktionsstellung der Schwellerverkleidung (16) die zweite Achse (W) unterhalb der Kulisse (58) angeordnet ist.

8. Verkleidungseinrichtung nach einem der vorhergehenden Ansprüche,
**dadurch gekennzeichnet, dass**
in der zweiten Funktionsstellung der Schwellerverkleidung (16) die zweite Achse (W) oberhalb des schräg nach unten verlaufenden Führungsabschnitts (61) der Kulisse (58) angeordnet ist.

9. Verkleidungseinrichtung nach einem der vorhergehenden Ansprüche,
**dadurch gekennzeichnet, dass**
bei einer Verlagerung der Schwellerverkleidung (16) von der ersten Funktionsstellung in die zweite Funktionsstellung und/oder von der zweiten Funktionsstellung in die ersten Funktionsstellung jeweils beide Verkleidungselemente (24,46) in die gleiche Richtung um die jeweilige Achse (L) beziehungsweise (W) schwenken.

10. Verkleidungseinrichtung nach einem der vorhergehenden Ansprüche,
**dadurch gekennzeichnet, dass**
bei in zweiter Funktionsstellung angeordneter Schwellerverkleidung (16) eine obere Längsrandkante (47) des ersten Verkleidungselements (24) -in Kraftwagenhochrichtung (z-Richtung) gesehen- oberhalb des zweiten Verkleidungselements (46) angeordnet ist.

11. Personenkraftwagen mit einem Seitenschweller (10), welcher mit einer Verkleidungseinrichtung nach einem der Ansprüche 1 bis 10 versehen ist.

## Claims

1. Cladding device for a side skirt (10) of a passenger vehicle, comprising a skirt lining (16), which has first and second cladding elements (24, 46) movably coupled to one another and arranged in a longitudinal region (22) of the side skirt (10) below a door opening (14), and comprising a drive unit (A), by means of which the cladding elements (24, 46) can be moved together between a first functional position and a second functional position, the first cladding element (24) being pivotable about a first axis (L) and the second cladding element (46) being pivotable about a second axis (W), the second cladding element (46) being mounted by means of a bearing device on the first cladding element (24) so as to be pivotable about the second axis (W) and the displacement movement of the second cladding element (46) relative to the first cladding element (24) being positively controlled by means of a link (58), **characterized in that** the bearing device comprises a coupler (56) which is mounted on the first cladding element (24) so as to be pivotable about the second axis (W) and is connected to the second cladding element (46).

2. Cladding device according to claim 1,
**characterized in that**
the coupler (56) is guided by means of the link (58).

3. Cladding device according to either of the preceding claims,
**characterized in that**
the link (58) has at least one guide portion (61) which extends obliquely downward toward the motor vehicle center from the outside as viewed in the motor vehicle longitudinal direction (x-direction).

4. Cladding device according to any of the preceding claims,
**characterized in that**
the link (58) is provided on a bearing piece (32, 34) which is fixed in position with respect to the side skirt (10).

5. Cladding device according to any of the preceding claims,
**characterized in that**
the second axis (W) is fixedly provided on the first cladding element (24).

6. Cladding device according to any of the preceding claims,
**characterized in that**
the first cladding element (24) is displaceable about the first axis (L) along a circular arc path (K) with the radius (R) and **in that** the circular arc path (K) intersects the link (58).

7. Cladding device according to any of the preceding claims,
**characterized in that**
in the first functional position of the skirt lining (16), the second axis (W) is arranged below the link (58).

8. Cladding device according to any of the preceding claims,
**characterized in that**
in the second functional position of the skirt lining (16), the second axis (W) is arranged above the guide portion (61) of the link (58) extending obliquely downward.

9. Cladding device according to any of the preceding claims,
**characterized in that**
when the skirt cover (16) is displaced from the first functional position into the second functional position and/or from the second functional position into the first functional position, the two cladding elements (24, 46) pivot in the same direction about the respective axes (L) and (W).

10. Cladding device according to any of the preceding claims,
**characterized in that**
when the skirt cladding (16) is arranged in the second functional position, an upper longitudinal edge (47) of the first cladding element (24) is arranged above the second cladding element (46) as viewed in the vertical direction of the motor vehicle (z-direction).

11. Passenger vehicle comprising a side skirt (10) which is provided with a cladding device according to any of claims 1 to 10.

## Revendications

1. Dispositif de revêtement pour une jupe latérale (10) d'une voiture de tourisme, comportant un revêtement de jupe (16) qui comprend des premier et second éléments de revêtement (24, 46) accouplés de manière mobile entre eux et disposés dans une zone longitudinale (22) de la jupe latérale (10) en dessous d'une ouverture de porte (14), et comportant une unité d'entraînement (A) à l'aide de laquelle les éléments de revêtement (24, 46) peuvent être déplacés ensemble entre une première position de fonctionnement et une seconde position de fonctionnement, dans lequel le premier élément de revêtement (24) peut pivoter autour d'un premier axe (L) et le second élément de revêtement (46) peut pivoter autour d'un second axe (W), dans lequel le second élément de revêtement (46) est monté sur le premier élément de revêtement (24) à l'aide d'un dispositif formant palier de manière à pouvoir pivoter autour du second axe (W), et le mouvement de déplacement du second élément de revêtement (46) par rapport au premier élément de revêtement (24) est commandé de manière forcée à l'aide d'une coulisse (58), **caractérisé en ce que** le dispositif formant palier comprend une bielle (56) montée sur le premier élément de revêtement (24) de manière à pouvoir pivoter autour du second axe (W) et reliée au second élément de revêtement (46).

2. Dispositif de revêtement selon la revendication 1,
**caractérisé en ce que**
la bielle (56) est guidée à l'aide de la coulisse (58).

3. Dispositif de revêtement selon l'une des revendications précédentes,
**caractérisé en ce que**
la coulisse (58) présente au moins une section de guidage (61) qui, vue dans la direction longitudinale de voiture (direction x), s'étend de manière inclinée vers le bas, depuis l'extérieur en haut en direction du centre de voiture

4. Dispositif de revêtement selon l'une des revendications précédentes,
**caractérisé en ce que**
la coulisse (58) est prévue sur un support de palier (32,34) disposé de manière fixe en position par rapport à la jupe latérale (10).

5. Dispositif de revêtement selon l'une des revendications précédentes,
**caractérisé en ce que**
le second axe (W) est prévu stationnaire sur le premier élément de revêtement (24).

6. Dispositif de revêtement selon l'une des revendications précédentes,
**caractérisé en ce que**
le premier élément de revêtement (24) peut être déplacé avec le rayon (R) autour du premier axe (L) le long d'un trajet en arc de cercle (K), et **en ce que** le trajet en arc de cercle (K) coupe la coulisse (58).

7. Dispositif de revêtement selon l'une des revendications précédentes,
**caractérisé en ce que**
dans la première position de fonctionnement du revêtement de jupe (16), le second axe (W) est disposé en dessous de la coulisse (58).

8. Dispositif de revêtement selon l'une des revendications précédentes,
**caractérisé en ce que**
dans la seconde position de fonctionnement du revêtement de jupe (16), le second axe (W) est disposé au-dessus de la section de guidage (61), s'étendant de manière inclinée vers le bas, de la coulisse (58).

9. Dispositif de revêtement selon l'une des revendications précédentes,
**caractérisé en ce que**
lorsque le revêtement de jupe (16) est déplacé de la première position de fonctionnement vers la seconde position de fonctionnement et/ou de la seconde position de fonctionnement vers la première position de fonctionnement, respectivement les deux éléments de revêtement (24,46) pivotent dans la même direction autour de l'axe (L) ou (W) respectif.

10. Dispositif de revêtement selon l'une des revendications précédentes,
**caractérisé en ce que**
lorsque le revêtement de jupe (16) est disposé dans la seconde position de fonctionnement, un bord longitudinal supérieur (47) du premier élément de revêtement (24), vu dans la direction verticale de voiture (direction z), est disposé au-dessus du second élément de revêtement (46).

11. Voiture de tourisme comportant une jupe latérale (10) pourvue d'un dispositif de revêtement selon l'une des revendications 1 à 10.
